# EUROPÄISCHE PATENTSCHRIFT

(11) **EP 3 884 775 B1**
(45) Veröffentlichungstag und Bekanntmachung des Hinweises auf die Patenterteilung: **21.08.2024**
(21) Anmeldenummer: 21401012.6
(22) Anmeldetag: 15.03.2021
(51) Int. Cl.: A01M 7/00, A01C 21/00, B05B 9/06

(54) **LANDWIRTSCHAFTLICHES SPRITZGERÄT UND VERFAHREN ZUM APPLIZIEREN VON SPRITZFLÜSSIGKEIT AUF EINER LANDWIRTSCHAFTLICHEN NUTZFLÄCHE**
AGRICULTURAL SPRAYER AND METHOD FOR APPLYING SPRAY LIQUID ON AN AGRICULTURAL WORKING SURFACE
APPAREIL DE PULVÉRISATION AGRICOLE ET PROCÉDÉ D'APPLICATION DE LIQUIDE DE PULVÉRISATION SUR UNE SURFACE AGRICOLE

(30) Priorität: 27.03.2020 DE 102020108500
(43) Veröffentlichungstag der Anmeldung: 29.09.2021
(73) Patentinhaber: Amazonen-Werke H. Dreyer GmbH & Co. KG, 49205 Hasbergen-Gaste (DE)
(72) Erfinder: Dreyer, Justus, 49078 Osnabrück (DE); Wessels, Thomas, 49080 Osnabrück (DE); Bangert, Waldemar, 49626 Berge (DE)

(56) Entgegenhaltungen:
- WO-A1-02/088679
- WO-A1-2018/154490
- WO-A1-2019/094266
- WO-A1-96/12401
- US-A- 5 184 775
- US-A1- 2015 245 565
- US-A1- 2016 368 011

## Beschreibung

Die Erfindung betrifft ein landwirtschaftliches Spritzgerät gemäß dem Oberbegriff des Patentanspruches 1 und ein Verfahren zum Applizieren von Spritzflüssigkeit auf einer landwirtschaftlichen Nutzfläche gemäß dem Oberbegriff des Patentanspruches 6.

In einer Vielzahl von Anwendungsfällen, insbesondere in der Landwirtschaft, werden Spritzgeräte zum Ausbringen von Spritzflüssigkeit auf einer landwirtschaftlichen Nutzfläche eingesetzt. Je nach Anwendungsgebiet werden hierbei Unkrautbekämpfungsmittel und/oder Pflanzenschutzmittel, wie beispielsweise Herbizide, Fungizide und/oder Insektizide, und/oder Düngemittel für den heranwachsende Pflanzenbestand verwendet. Gattungsgemäße Spritzgeräte umfassen hierbei zumindest einen Vorratsbehälter von dem aus die Spritzflüssigkeit über zumindest eine Versorgungsleitung und dieser nachgeordnete Ausbringelemente, insbesondere Düsen, auf der landwirtschaftlichen Nutzfläche ausbringbar ist. Typischerweise ist zumindest ein Teil der Versorgungsleitung und/oder die Ausbringelemente, insbesondere Düsen, an einem aus mehreren Abschnitten, vorzugsweise im Wesentlichen quer zu einer Fahrtrichtung, ausgebildeten Gestänge angeordnet. Insbesondere während des Ausbringens der Spritzflüssigkeit ist die Einstellung einer bedarfsgerechten Ausbringrate von außerordentlicher Wichtigkeit, um einerseits gute Ausbringergebnisse und andererseits gute Ertragssteigerungen zu erzielen. Ferner ist es aufgrund stetig ansteigender Anforderungen hinsichtlich Umweltbelastungen immer wichtiger den Einsatz von Unkrautbekämpfungsmittel und/oder Pflanzenschutzmittel so weit wie möglich zu reduzieren.

Neben unterschiedlicher Parameter, die vom Spritzgerät abhängig sind, ist insbesondere die Beschaffenheit der landwirtschaftlichen Nutzfläche, insbesondere deren Nutzpflanzen- und/oder Unkrautbestand, für die Ausbringmenge der Spritzflüssigkeit von entscheidender Bedeutung. Um eine möglichst bedarfsgesteuerte Ausbringmenge zu erreichen, umfassen moderne landwirtschaftliche Spritzgeräte typischerweise mehrere Ausbringelemente die entlang des Gestänges selektiv steuer- und/oder regelbar sind.

Aus der WO 2018/154490 A1 ist ein landwirtschaftliches Spritzgerät mit zumindest einem ersten und zweiten Ausbringelement, welche an einem Spritzgestänge angeordnet und dazu eingerichtet sind, Spritzflüssigkeit in Abhängigkeit eines Betriebszustandes auf der landwirtschaftlichen Nutzfläche, insbesondere auf deren Pflanzenbestand, zu applizieren. Ferner umfasst das Spritzgerät zumindest eine Erfassungseinrichtung, welche dazu eingerichtet ist, einen Pflanzenbestand, insbesondere in Form von Unkraut- und/oder Wildbewuchs, auf der landwirtschaftlichen Nutzfläche zu erfassen. Des Weiteren weist das Spritzgerät zumindest eine Verstelleinrichtung auf, mittels welcher der Auftreffbereich der von dem zumindest einen ersten und/oder zweiten Ausbringelement applizierbaren Spritzflüssigkeit einstellbar ist.

Nachteilig an dieser Vorrichtung ist, dass hierbei nur ein besonders großer Bereich der landwirtschaftlichen Nutzfläche mittels der jeweiligen Ausbringelemente mit Spritzflüssigkeit benetzbar ist. Somit werden hierbei zumindest teilweise auch Bereiche mit Spritzflüssigkeit belastet, die nur geringfügig oder kein Unkraut- und/oder Wildbewuchs aufweisen.

Ein derartiges Spritzgerät ist ebenso aus der Druckschrift WO 2019/094266 A1 bekannt. Zusätzlich ist hierbei der Betriebszustand in Abhängigkeit des erfassten Pflanzenbestandes auswählbar und die Spritzflüssigkeit in einem ersten Betriebszustand über das zumindest eine erste Ausbringelement und in einem zweiten Betriebszustand über das zumindest eine zweite Ausbringelement applizierbar.

Die US 2015/0245565 A1 offenbart hingegen ein Spritzgerät zur bedarfsgerechten Einzelpflanzenbehandlung, insbesondere einzelnen Unkraut- und/oder Wildbewuchs. Das Spritzgerät umfasst hierbei neben einer Erfassungseinrichtung zum Erfassen des Pflanzenbestandes, insbesondere zumindest einer Einzelpflanze, außerdem über eine Verstelleinrichtung zum Einstellen des Auftreffbereiches der von den Ausbringelementen ausbringbaren Spritzflüssigkeit.

Die Ausbringelemente, insbesondere Düsen, weisen hierbei einen Spritzfächer mit besonders spitzem Winkel des Spritzfächers auf, der dazu geeignet ist, jeweils nur einen besonders geringen Bereich der landwirtschaftlichen Nutzfläche, insbesondere eine Einzelpflanze, zu benetzen.

Es hat sich hierbei jedoch gezeigt, dass mit einem derartigen Spritzgerät vergleichsweise nur besonders geringe Arbeitsgeschwindigkeiten zur Behandlung der landwirtschaftlichen Nutzfläche erreichbar sind. Um zumindest nahezu den gesamten Pflanzenbestand mit Spritzflüssigkeit zu benetzen und/oder die jeweiligen Ausbringelemente und/oder Verstelleinrichtungen nicht zu überlasten, sind somit bisher entweder besonders viele Ausbringelemente oder besonders geringe Arbeitsgeschwindigkeiten des Spritzgerätes erforderlich.

Die der Erfindung zugrunde liegende Aufgabe besteht somit darin, ein Spritzgerät so zu gestalten, dass die Spritzflüssigkeit mit gesteigerter Effizienz auf der landwirtschaftlichen Nutzfläche, insbesondere deren Pflanzenbestand, applizierbar ist. Der Erfindung liegt ferner die Aufgabe zu Grunde, ein Verfahren zum Applizieren von Spritzflüssigkeit anzugeben.

Diese Aufgabe wird erfindungsgemäß durch die kennzeichnenden Merkmale des Anspruchs 1 gelöst. Ferner wird die Aufgabe im Hinblick auf das Verfahren durch den Gegenstand des Anspruches 6 gelöst.

Infolge dieser Maßnahme werden Ausbringelemente mit unterschiedlichen Spritzprofilen innerhalb eines Spritzgeräts verwendet. Je nach Betriebszustand ist somit die Ausbringung der Spritzflüssigkeit über Ausbringelemente, insbesondere Düsen, mit einem ersten oder zweiten Spritzprofil ausführbar. Somit ist das Spritzgerät sowohl zur Flächen- und/oder Reihenbehandlung als auch zur Einzelbehandlung von Pflanzenbestand, insbesondere Unkraut- und/oder Wildbewuchs, einsetzbar. Dies erlaubt neben einer besonders Spritzflüssigkeit einsparenden und/oder umweltschonenden Einzelpflanzenbehandlung außerdem eine Flächen- und/oder Reihenbehandlung mit besonders großer Arbeitsgeschwindigkeit des Spritzgeräts.

Das zumindest eine erste und zweite Ausbringelement kann erfindungsgemäß getrennt und/oder gemeinsam am Gestänge angeordnet sein. Alternativ oder zusätzlich ist denkbar, dass das zumindest eine erste und zweite Ausbringelement an unterschiedlichen Positionen entlang des Gestänges angeordnet ist. Besonders bevorzugt sind zumindest zwei separate Versorgungsleitungen, wobei das zumindest eine erste und zweite Ausbringelement jeweils mit unterschiedlichen Versorgungsleitungen fluidleitend verbindbar ist. Das erste Ausbringelement ist hierbei mit einer ersten Versorgungsleitung und das zweite Ausbringelement mit einer zweiten Versorgungsleitung verbindbar. Ferner ist bevorzugt, wenn aus dem ersten Ausbringelement eine erste Spritzflüssigkeit mit einer ersten, insbesondere hohen, Wirkstoffkonzentration und aus dem zweiten Ausbringelement eine zweite Spritzflüssigkeit mit einer zweiten, insbesondere geringen, Wirkstoffkonzentration applizierbar ist. Hierbei sind ein geeignetes Vormischsystem und/oder unterschiedliche Vorratsbehälter denkbar, die über ein geeignetes Fördersystem mit den Versorgungsleitungen fluidleitend verbunden sind.

In einer alternativen oder zusätzlich bevorzugten Ausführungsform ist das erste und zweite Ausbringelement zu einer Düse zusammengefasst, wobei das Spritzprofil der Düse anpassbar ist.

Darüber hinaus ist dem Spritzgerät zumindest ein Steuer- und/oder Regelsystem zugeordnet das dazu eingerichtet ist, den Betriebszustand des Spritzgeräts bevorzugt automatisiert in Abhängigkeit des erfassbaren Pflanzenbestandes auszuwählen. Alternativ oder zusätzlich ist der Betriebszustand von einem Maschinenbediener mittels eines dem Spritzgerät zugeordneten Anzeige- und/oder Bedienelementes auswählbar. Das Spritzgerät ist folglich dazu geeignet, die Spritzflüssigkeit während des ersten Betriebszustandes über das zumindest eine erste Ausbringelement und während des zweiten Betriebszustandes über das zumindest eine zweite Ausbringelement auszubringen. Ferner ist ein Spritzgerät besonders bevorzugt bei welchem mehrere erste und zweite Ausbringelemente entlang des Gestänges angeordnet sind, wobei jeweils zumindest ein erstes und zweites Ausbringelement in Gruppen, insbesondere Abschnitten, zueinander zugeordnet sind, und wobei der Betriebszustand jeweils einer Gruppe, insbesondere eines Abschnitts, umschaltbar ist. Somit ist der Betriebszustand der jeweils einzelnen in Gruppen, insbesondere Abschnitte, zugeordneten ersten und zweiten Ausbringelemente entlang des Gestänges anpassbar.

Die Erfassungseinrichtung kann hierbei zumindest einen optischen Sensor und/oder zumindest eine optische, insbesondere bilderfassende, Kamera aufweisen die bevorzugt im Bereich des Gestänges, insbesondere in Fahrtrichtung vor den Spritzdüsen, angeordnet sind. Ferner ist mittels der zumindest einen Erfassungseinrichtung der Pflanzenbestand innerhalb eines vom Blickfeld, insbesondere objektiv, abhängigen Erfassungsbereich erfassbar. Besonders bevorzugt sind hierbei mehrere Sensoren und/oder Kameras die jeweils zumindest einem Ausbringelement und/oder einer Gruppe von Ausbringelementen zugeordnet sind. Ferner ist eine Ausführungsform der Erfassungseinrichtung bevorzugt bei der zumindest ein Sensor und/oder eine Kamera in Fahrtrichtung hinter den Ausbringelementen angeordnet ist, wobei das Blickfeld auf einen Bereich der Nutzfläche ausgerichtet ist der sich in Fahrtrichtung vor den Ausbringelementen befindet.

In einer weiteren bevorzugten Ausführungsform des erfindungsgemäßen Spritzgeräts umfasst die Verstelleinrichtung zumindest einen Aktor, wobei das zumindest eine erste und/oder zweite Ausbringelement mittels des Aktors verstellbar ist. Die Verstelleinrichtung ist hierbei bevorzugt dazu eingerichtet, die Position des zumindest einen ersten und/oder zweiten Ausbringelementes auf dem Spritzgestänge und/oder die Ausrichtung des zumindest einen ersten und/oder zweiten Ausbringelementes zu verstellen. Ferner ist somit der Auftreffbereich der aus dem zumindest einen ersten und/oder zweiten Ausbringelement ausbringbaren Spritzflüssigkeit zumindest teilweise verstellbar. In einer besonders bevorzugten Ausführungsform ist die Position des zumindest einen zweiten Ausbringelementes entlang des Gestänges fixiert während die Position und/oder die Ausrichtung, insbesondere der Auftreffbereich, des ersten Ausbringelementes mittels der Verstelleinrichtung verstellbar ist. Somit ist das zumindest eine erste Ausbringelement und/oder der Auftreffbereich des ersten Ausbringelementes auf zumindest eine mittels der Erfassungseinrichtung erfassbare, insbesondere Unkraut- und/oder Wild-, Pflanze einstellbar. Die Verstellung ist hierbei bevorzugt über zumindest einen dem ersten Ausbringelement zugeordneten Aktor ausführbar. In einer weiteren bevorzugten Ausführungsform ist das zumindest eine erste Ausbringelement zumindest teilweise um eine zum Spritzfächer zumindest im Wesentlichen senkrechten Achse verschwenkbar. Mittels einer derartig ausgebildeten Ausführungsform ist der Applizierungsbereich der einzelnen Ausbringelemente besonders vergrößert. Der Bereich der Nutzfläche auf dem mit einem Ausbringelement Spritzflüssigkeit applizierbar ist, ist somit neben der Breite des Spritzfächers außerdem vom Verstellbereich des jeweiligen Ausbringelementes abhängig.

Erfindungsgemäß weist das zumindest eine erste Ausbringelement ein für eine Einzelpflanzenbehandlung geeignetes Spritzprofil und das zumindest eine zweite Ausbringelement ein für eine Flächenbehandlung geeignetes Spritzprofil auf. Hierbei ist die Spritzflüssigkeit über das wenigstens eine erste Ausbringelemente zumindest nahezu punktuell auf die Einzelpflanze ausbringbar. Besonders bevorzugt ist hierbei ein zumindest teilweise als Rund- und/oder Punktstrahl ausgebildetes Spritzprofil das aus dem zumindest einen ersten Ausbringelement ausbringbar ist. Ferner ist hierbei die Spritzflüssigkeit über das wenigstens eine zweite Ausbringelement auf zumindest eine Einzelpflanze, vorzugsweise auf zumindest teilweise mehrere Pflanzen gleichzeitig, applizierbar. Das zweite Ausbringelement ist hierbei in Form einer Flachstrahldüse ausgebildet mit einem sich ausgehend vom Ausbringelement zumindest teilweise ausdehnenden Spritzfächer. Diese Ausführungsform bietet den Vorteil, dass der Einsatzbereich des erfindungsgemäßen Spritzgeräts besonders flexibel ausgebildet ist. Ein derartig ausgeführtes Spritzgerät ist somit sowohl zur Einzelpflanzenbehandlung als auch zur Flächen- und/oder Reihenbehandlung besonders gut geeignet.

In einer Weiterbildung des erfindungsgemäßen Spritzgeräts ist die Spritzflüssigkeit in einem dritten Betriebszustand über das zumindest eine erste und das zumindest eine zweite Ausbringelement applizierbar. Hierbei ist die Spritzflüssigkeit zumindest nahezu zeitgleich aus dem zumindest einen ersten und zweiten Ausbringelement ausbringbar. Alternativ oder zusätzlich ist auch eine sequentielle Ausbringung der Spritzflüssigkeit aus dem ersten und zweiten Ausbringelement realisierbar. Hierbei können die Ausbringelemente zusätzlich in Abhängigkeit der Position des Spritzgeräts, insbesondere der jeweiligen Ausbringelemente, auswählbar und/oder aktivierbar sein. Des Weiteren ist bevorzugt, dass bei mehreren Ausbringelementen jeweils zumindest ein zweites Ausbringelement zumindest einem ersten Ausbringelement zugeordnet ist. Somit sind mittels des erfindungsgemäßen Spritzgeräts zum einen besonders hohe Arbeitsgeschwindigkeiten und zum anderen besonders hohe Genauigkeiten beim Applizieren der Spritzflüssigkeit erreichbar.

In einer anderen bevorzugten Ausführungsform des erfindungsgemäßen Spritzgeräts sind mittels der Erfassungseinrichtung die Abmessungen und/oder der Typ und/oder die Anzahl der Pflanzen, insbesondere in einem vorgegebenen Erfassungsbereich, erfassbar. Hierbei ist der Betriebszustand in Abhängigkeit der Abmessungen und/oder des Typs und/oder der Anzahl der Pflanzen, insbesondere des Unkraut und/oder Wildbewuchses, auswählbar. Der erste Betriebszustand ist hierbei zur Benetzung einer geringen Anzahl an Pflanzen und/oder von Pflanzen mit geringen Abmessungen verwendbar. Für eine große Anzahl an Pflanzen und/oder Pflanzen mit großen Abmessungen, die insbesondere mit dem Spritzprofil des ersten Ausbringelementes nicht ausreichend benetzbar sind, ist der zweite und/oder dritte Betriebszustand verwendbar. Des Weiteren ist bevorzugt der Typ der Pflanze, insbesondere die Art und/oder Sorte, mittels der Erfassungseinrichtung und/oder dem Steuer- und/oder Regelsystem berücksichtigbar. Somit ist das Ausbringelement beispielsweise in Abhängigkeit der Widerstandsfähigkeit der jeweiligen Pflanze, insbesondere Unkrautbewuchses, und/oder der Wirkstoffkonzentration der Spritzflüssigkeit auswählbar. Ferner ist bei geringer Dichte des Pflanzenbestandes, insbesondere Unkraut- und/oder Wildbewuchses, eine Reduktion der Spritzflüssigkeit und somit eine besonders hohe Effizienz des Spritzgeräts erreichbar.

Des Weiteren ist mittels der Erfassungseinrichtung die Position des Pflanzenbestandes, insbesondere des Unkraut- und/oder Wildbewuchses, erfassbar. Das dem Spritzgerät zugeordnete Steuer- und/oder Regelsystem ist hierbei dazu eingerichtet, das zumindest eine erste und/oder zweite Ausbringelement in Abhängigkeit der erfassten Position des Pflanzenbestandes so auszuwählen und/oder zu aktivieren, dass die ausbringbare Spritzflüssigkeit, insbesondere der Auftreffbereich, den erfassten Pflanzenbestand zumindest teilweise benetzt. Ferner ist das zumindest eine erste und/oder zweite Ausbringelement, insbesondere deren Auftreffbereich, mittels der Verstelleinrichtung auf die zumindest eine erfassbare Pflanze, insbesondere den Unkraut- und/oder Wildbewuchs, ausrichtbar. Mittels der somit realisierbaren zielgerichteten Ausbringung der Spritzflüssigkeit ist die Effizienz des erfindungsgemäßen Spritzgeräts noch weiter gesteigert.

In einer anderen Weiterbildung des erfindungsgemäßen Spritzgeräts ist die Geschwindigkeit des Spritzgerätes, insbesondere zumindest eines Ausbringelementes, erfassbar und der Betriebszustand in Abhängigkeit der Geschwindigkeit auswählbar. Das Steuer- und/oder Regelsystem ist hierbei dazu eingerichtet, den Betriebszustand und somit die Ausbringelemente in Abhängigkeit der Geschwindigkeit des Spritzgerätes, insbesondere der Ausbringelemente, auszuwählen und/oder zu aktivieren. Ferner sind hierbei zur Auswahl des Betriebszustandes bevorzugt zusätzlich die Anzahl und/oder die Abmessungen der Pflanzen innerhalb des erfassbaren Pflanzenbestandes berücksichtigbar. Darüber hinaus ist denkbar, dass weitere Randbedingungen, wie beispielsweise die Windgeschwindigkeit, mittels eines dem Spritzgerät zugeordneten Sensors und/oder von einer Bereitstellungseinrichtung, insbesondere einem Datenspeicher und/oder Server, abrufbar und für die Auswahl und/oder Aktivierung des Betriebszustandes, vorzugsweise vom Steuer- und/oder Regelsystem, berücksichtigbar sind.

Die der Erfindung zugrunde liegende Aufgabe wird ferner durch ein Verfahren zum Ausbringen einer Spritzflüssigkeit auf einer landwirtschaftlichen Nutzfläche mit einem landwirtschaftlichen Spritzgerät nach einer der vorstehend beschriebenen Ausführungsformen gelöst, wobei das Verfahren gemäß Anspruch 6 ausgeführt ist. Demnach umfasst das erfindungsgemäße Verfahren außerdem zumindest die folgenden Schritte:
- Auswählen des Betriebszustandes in Abhängigkeit des erfassten Pflanzenbestandes; und
- Applizieren der Spritzflüssigkeit in einem ersten Betriebszustand und einem ersten Spritzprofil über das zumindest eine erste Ausbringelement; und/oder
- Applizieren der Spritzflüssigkeit in einem zweiten Betriebszustand und einem zweiten Spritzprofil über das zumindest eine zweite Ausbringelement.

Hinsichtlich der Vorteile und Modifikationen des erfindungsgemäßen Verfahrens wird zunächst auf die Vorteile und Modifikationen des erfindungsgemäßen Spritzgeräts verwiesen.

Bei dem erfindungsgemäßen Verfahren wird in einem ersten Schritt der Pflanzenbestand, insbesondere in Form von Unkraut- und/oder Wildbewuchs, auf der landwirtschaftlichen Nutzfläche mittels der Erfassungseinrichtung erfasst. Des Weiteren wird die Spritzflüssigkeit in einem weiteren Schritt in Abhängigkeit des Betriebszustandes mittels dem zumindest einen ersten und/oder zweiten Ausbringelement, welche an dem Spritzgestänge angeordnet sind, auf der landwirtschaftlichen Nutzfläche appliziert. In einem anderen Schritt wird der Auftreffbereich der aus den ersten und/oder zweiten Ausbringelementen ausgebringbaren Spritzflüssigkeit bevorzugt mittels einer Verstelleinrichtung verändert.

Darüber hinaus ist ein erfindungsgemäßes Verfahren bevorzugt bei dem die Spritzflüssigkeit in einem dritten Betriebszustand über das zumindest eine erste und zweite Ausbringelement appliziert wird. Das Applizieren wird hierbei mittels der ersten und zweiten Ausbringelemente bevorzugt zumindest nahezu gleichzeitig oder sequentiell ausgeführt. Bei zumindest nahezu gleichzeitiger Ausbringung an Spritzflüssigkeit können sich das Spritzprofil, insbesondere der Spritzfächer, der ersten und zweiten Ausbringelemente zumindest teilweise überlappen. Bei einer sequentiellen Ausbringung sind die ersten und zweiten Ausbringelemente, insbesondere in Fahrtrichtung, zumindest teilweise versetzt zueinander angeordnet. Das erste und zweite Ausbringelement ist hierbei mit jeweils derselben oder mit unterschiedlichen Versorgungsleitungen fluidleitend verbunden. Bei unterschiedlichen Versorgungsleitung können somit außerdem zumindest teilweise unterschiedliche Spritzflüssigkeiten, insbesondere mit unterschiedlichen Wirkstoffkonzentrationen, durch die ersten und zweiten Ausbringelemente ausgebracht werden. Ferner wird hierbei bevorzugt die Menge der zu applizierenden Spritzflüssigkeit aus dem ersten und zweiten Ausbringelement, insbesondere benachbarter Ausbringelemente, berücksichtigt und/oder angepasst. Mittels des dritten Betriebszustands ist somit eine hohe Arbeitsgeschwindigkeit des Spritzgeräts bei zumindest nahezu gleicher oder höherer Dichte des Pflanzabstandes, insbesondere Unkraut- und/oder Wildbewuchses, erreichbar.

Beim erfindungsgemäßen Verfahren werden die Abmessungen und/oder die Typen und/oder die Anzahl der Pflanzen, insbesondere in einem vorgegebenen Erfassungsbereich, mittels der Erfassungseinrichtung erfasst und/oder der Betriebszustand in Abhängigkeit der erfassten Abmessungen und/oder des Typs und/oder der Anzahl der Pflanzen, insbesondere durch Überschreiten eines vorgegebenen Schwellenwertes umgeschaltet. Hierbei wird ein bestimmter Teilbereich, insbesondere Ausschnitt, der landwirtschaftlichen Nutzfläche, insbesondere in Fahrtrichtung unmittelbar vor den Ausbringelementen, erfasst und/oder berücksichtigt. Somit ist die Spritzflüssigkeit vorrangig aus dem zumindest einen ersten Ausbringelement und erst beim Erreichen einer Überlast alternativ oder zusätzlich aus dem zumindest einen zweiten Ausbringelement ausbringbar. Eine Überlast stellt hierbei einen Schwellenwert von Anzahl, Abmessungen und/oder Typen an Pflanzen dar, die, insbesondere bei zumindest nahezu gleich bleibender Geschwindigkeit des Spritzgeräts und/oder der Ausbringelemente, mittels der ersten Ausbringelemente nicht ausreichend mit Spritzflüssigkeit benetzbar sind.

In einer besonders bevorzugten Weiterbildung des erfindungsgemäßen Verfahrens wird der Betriebszustand in Abhängigkeit einer von dem Spritzgerät, insbesondere zumindest eines Ausbringelementes, erfassbaren Geschwindigkeit umgeschaltet. Hierbei wird zur Bestimmung des zum Umschalten der Betriebszustände erforderlichen Schwellenwertes zusätzlich die Geschwindigkeit des Spritzgerätes, insbesondere zumindest eines Ausbringelementes erfasst und/oder vom Steuer- und/oder Regelsystem berücksichtigt. Somit kann der Schwellenwert beispielsweise bei höheren Geschwindigkeiten niedriger sein als bei kleinen Geschwindigkeiten.

In einer Alternativen Ausführungsform wird außerdem die Windgeschwindigkeit, insbesondere im Bereich des Spritzgeräts erfasst und für die Auswahl und/oder Aktivierung des Betriebszustandes, insbesondere vom Steuer- und/oder Regelsystem, berücksichtigt.

Weitere Einzelheiten der Erfindung sind der Beispielsbeschreibung und den Zeichnungen zu entnehmen. Die Zeichnungen zeigen
- Fig.1: ein Ausführungsbeispiel eines Gestängesegments eines erfindungsgemäßen landwirtschaftlichen Spritzgeräts; und
- Fig.2: ein Ablaufdiagramm eines erfindungsgemäßen Verfahrens zum Applizieren von Spritzflüssigkeit mit einem landwirtschaftlichen Spritzgerät.

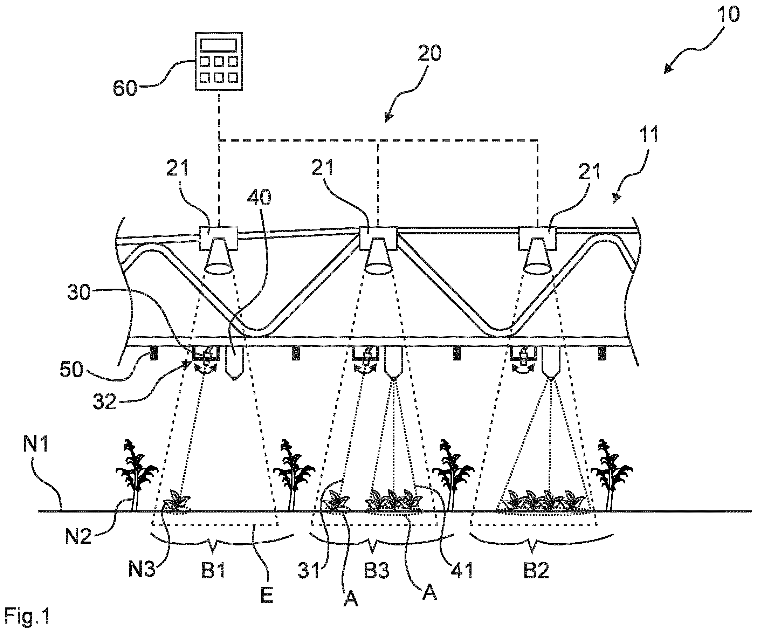

Die Fig. 1 zeigt einen Teil eines an einem landwirtschaftlichen Spritzgerät 10 angeordneten und klappbaren Gestänges 11 zum Applizieren von Spritzflüssigkeit auf den Pflanzenbestand N2, N3 einer landwirtschaftlichen Nutzfläche N1. Das Gestänge 11 umfasst mehrere erste und zweite Ausbringelemente 30, 40 die an der Unterseite des Gestänges 11 angeordnet und dazu eingerichtet sind, die Spritzflüssigkeit in Abhängigkeit eines Betriebszustandes B1-B3 auf den Pflanzenbestand, insbesondere Unkraut- und/oder Wildbewuchs N3, zu applizieren. Ferner sind mehrere Applikationsdüsen 50 am Gestänge 11 angeordnet die dazu eingerichtet sind, Spritzflüssigkeit auf die Nutzpflanzen N2 zu applizieren. Darüber hinaus umfasst das landwirtschaftliche Spritzgerät 10 zumindest eine Erfassungseinrichtung 20 die mehrere an dem Gestänge 11 angeordnete Kameraobjektive 21 aufweist. Die Erfassungseinrichtung 20 ist hierbei dazu eingerichtet, den Pflanzenbestand, insbesondere Nutzpflanzen N2 und/oder Unkraut- und/oder Wildbewuchs N3, auf der landwirtschaftlichen Nutzfläche N1 zu erfassen. Über eine dem Spritzgerät 10, insbesondere den Ausbringelementen 30, 40 zugeordnete Verstelleinrichtung 32 ist der Auftreffbereich A der von den ersten und zweiten Ausbringelemente 30, 40 applizierbaren Spritzflüssigkeit einstellbar.

Darüber hinaus ist dem Spritzgerät 10 ein Steuer- und/oder Regelsystem 60 zugeordnet, über das der Betriebszustand des Spritzgeräts 10 und/oder der Ausbringelemente 30, 40 auswählbar und/oder aktivierbar ist.

Die Spritzlüssigkeit ist hierbei in einem ersten Betriebszustand B1 über die ersten Ausbringelemente 30 und in einem zweiten Betriebszustand B2 über die zweiten Ausbringelemente 40 applizierbar. Die ersten und zweiten Ausbringelemente 30, 40 weisen jeweils unterschiedliche Spritzprofile 31,41 auf, wobei die ersten Ausbringelement 30 ein zur Einzelpflanzenbehandlung und die zweiten Ausbringelemente 40 ein zur Flächenbehandlung geeignetes Spritzprofil 31, 41 aufweisen. Die ersten Ausbringelemente 30 sind als Rund- und/oder Punktstrahldüsen und die zweiten Ausbringelemente 40 als Flachstrahldüsen, insbesondere mit einem sich nach unten hin ausdehnenden Spritzfächer 41, ausgebildet. In einer alternativen nicht gezeigten Ausführungsform sind die ersten Ausbringelemente 30 als Flachstrahldüsen mit besonders spitz gewinkelten Spritzfächer 31, der insbesondere kleiner als bei den zweiten Ausbringelementen 40 ausgeformt ist, ausgebildet. Der Betriebszustand B1-B3 ist in Abhängigkeit des erfassbaren Pflanzenbestandes, insbesondere des Unkraut- und/oder Wildbewuchses N3, auswählbar.

Ferner ist das Spritzgerät 10 dazu eingerichtet, die Spritzflüssigkeit in einem dritten Betriebszustand B3 über die ersten und zweiten Ausbringelemente 30, 40 zu applizieren. Dabei wird die Spritzflüssigkeit, insbesondere zumindest nahezu zeitgleich, von den jeweils ersten und zweiten Ausbringelementen 30,40 ausgebracht. In einer alternativen nicht gezeigten Ausführungsform ist denkbar, dass die Spritzflüssigkeit im dritten Betriebszustand von den ersten zu den zweiten Ausbringelementen 30, 40 sequentiell ausgebracht wird. Bei einer in Fahrtrichtung des Spritzgeräts 10 versetzten Anordnung der ersten und zweiten Ausbringelemente 30, 40, wird die Spritzflüssigkeit zuerst über die ersten Ausbringelemente 30 und anschließend über die zweiten Ausbringelemente 40 ausgebracht. Eine Umkehrung der Applizierungsreihenfolge ist in einer weiteren alternativen Ausführungsform ebenso denkbar.

Mittels der Erfassungseinrichtung 20 sind die Abmessungen und/oder der Typ und/oder die Anzahl der Pflanzen N2, N3, insbesondere in einem vorgegebenen Erfassungsbereich E, erfassbar. Des Weiteren ist der Betriebszustand B1-B3 in Abhängigkeit der erfassbaren Pflanzen N2, N3 auswählbar und/oder aktivierbar. Der erste Betriebszustand B1 wird hierbei für eine geringe Anzahl bzw. Dichte an Pflanzen, insbesondere Unkräuter N3, mit kleinen Abmessungen verwendet. Der zweite Betriebszustand B2 wird bei einer hohen Anzahl und/oder bei großen Abmessungen der Pflanzen, insbesondere Unkräuter N3, verwendet. Der dritte Betriebszustand B3 eignet sich für eine besonders hohe Anzahl und/oder große Abmessungen der Pflanzen, insbesondere Unkräuter N3.

Darüber hinaus ist mittels dem Steuer- und/oder Regelsystem 60 die Geschwindigkeit des Spritzgeräts 10, insbesondere der Ausbringelemente 30, 40, erfassbar und der Betriebszustand B1 - B3 in Abhängigkeit der Geschwindigkeit auswählbar und/oder aktivierbar. Somit kann ein Schwellenwert zum Umschalten der Betriebszustände B1-B3 angepasst werden. Bei hohen Geschwindigkeiten beispielsweise kann der Schwellenwert dementsprechend reduziert und bei kleinen Geschwindigkeiten erhöht werden.

Die Verstelleinrichtung 32 weist hierbei jeweils an jedem der ersten Ausbringelemente 30 zumindest einen in den Figuren nicht dargestellten Aktor aus. Mittels des Aktors ist die Verstelleinrichtung 32 dazu eingerichtet, die jeweiligen ersten Ausbringelemente 30 um einen im Wesentlichen senkrechten Winkel zum Spritzfächer 31 zu verschwenken. Somit ist der Auftreffbereich A der ersten Ausbringelemente 30 quer zur Fahrtrichtung des Spritzgeräts 10, insbesondere des Gestänges 11, verstellbar. in einer alternativen nicht gezeigten Ausführungsform sind die ersten Ausbringelemente 30, insbesondere deren Auftreffbereich A, in eine zumindest im Wesentlichen mit der Fahrtrichtung korrespondierenden Richtung verstellbar. In einer weiteren nicht gezeigten Ausführungsform sind die zweiten Ausbringelemente 40, insbesondere deren Auftreffbereich A, in zumindest nahezu gleicher Weise verstellbar.

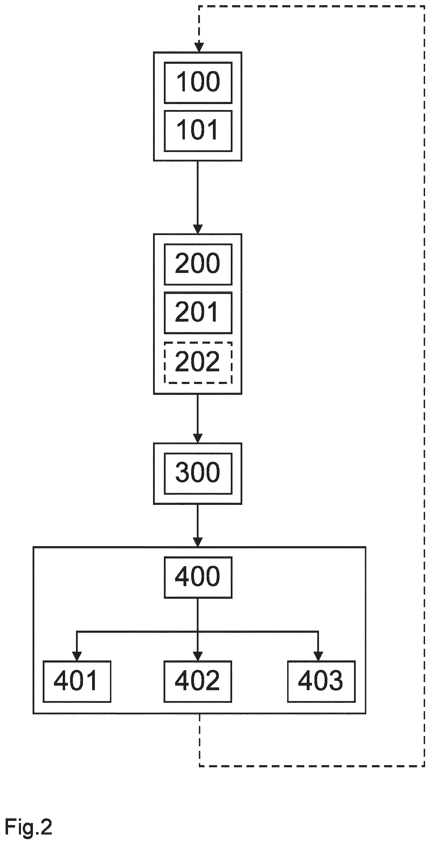

Die Fig.2 zeigt ein Ablaufdiagramm eines Verfahrens zum Applizieren einer Spritzflüssigkeit mittels eines landwirtschaftlichen Spritzgeräts 10. Das Verfahren wird durch zumindest einen der nachfolgenden Schritte eingeleitet:

| | |
|---|---|
| 100) | Erfassen des Pflanzenbestandes N2, N3, insbesondere in Form von Unkraut- und/oder Wildbewuchs, auf einer landwirtschaftlichen Nutzfläche N1 mittels einer Erfassungseinrichtung 20; und/oder |
| 101) | Erfassen der Abmessungen und/oder des Typs und/oder der Anzahl der Pflanzen, insbesondere in einem vorgegebenen Erfassungsbereich, mittels der Erfassungseinrichtung 20. |

Im Rahmen der Erfassung des Pflanzenbestandes N2, N3 auf der landwirtschaftlichen Nutzfläche N1 wird zunächst zumindest einer der folgenden zwei Schritte ausgeführt:

| | |
|---|---|
| 200) | Auswählen des Betriebszustandes B1-B3 in Abhängigkeit des erfassten Pflanzenbestandes N2, N3; und/oder |
| 201) | Umschalten des Betriebszustandes B1-B3 in Abhängigkeit der erfassten Abmessungen und/oder des Typs und/oder der Anzahl der Pflanzen N2, N3, insbesondere durch Überschreiten eines vorgegebenen Schwellenwertes. |

Nachdem der an den jeweiligen Ausbringelementen 30, 40 erforderliche Betriebszustand B1-B3 ausgewählt und/oder aktiviert ist, kann der folgende Schritt ausgeführt werden:

| | |
|---|---|
| 300) | Verändern des Auftreffbereichs A der von der zumindest einen ersten und/oder zweiten Ausbringelemente 30, 40 abgegebenen Spritzflüssigkeit während des Ausbringvorgangs mittels der Verstelleinrichtung 32, |

Sobald ein oder mehrere Betriebszustände B1-B3 ausgewählt und/oder aktiviert und/oder die jeweiligen Auftreffbereiche A verändert wurden, wird der folgende Schritte ausgeführt:

| | |
|---|---|
| 400) | Applizieren von Spritzflüssigkeit auf der landwirtschaftlichen Nutzfläche N1, insbesondere auf deren Pflanzenbestand N2, N3, in Abhängigkeit des Betriebszustandes B1-B3 mittels zumindest einem ersten und zweiten Ausbringelement 30, 40, welche an dem Spritzgestänge 11 angeordnet sind. |

Der Schritt zum Applizieren der Spritzflüssigkeit über die Ausbringelemente 30, 40 wird erfindungsgemäß durch die folgenden Schritte ergänzt:

| | |
|---|---|
| 401) | Applizieren der Spritzflüssigkeit in einem ersten Betriebszustand und einem ersten Spritzprofil über das zumindest eine erste Ausbringelement 30; und/oder |
| 402) | Applizieren der Spritzflüssigkeit in einem zweiten Betriebszustand und einem zweiten Spritzprofil über das zumindest eine zweite Ausbringelement 40; und/oder |
| 403) | Applizieren der Spritzflüssigkeit in einem dritten Betriebszustand über das zumindest eine erste und zweite Ausbringelement 30, 40. |

Das Verfahren umfasst zum Auswählen und/oder Aktivieren des jeweiligen Betriebszustandes B1-B3 optional den zusätzlichen Schritt:

| | |
|---|---|
| 202) | Umschalten des Betriebszustandes in Abhängigkeit einer von dem Spritzgerät 10, insbesondere zumindest eines Ausbringelementes 30, 40, erfassbaren Geschwindigkeit. |

Alle oben beschriebenen Schritte können sich während des Applizierungs- und/oder Ausbringungsvorgangs ständig wiederholen.

### Bezugszeichenliste

- 10: Landwirtschaftliches Spritzgerät
- 11: Gestänge, Spritzgestänge
- 20: Erfassungseinrichtung
- 21: Kamera, Kameraobjektiv
- 30: Erstes Ausbringelement
- 31: Spritzfächer der ersten Ausbringelemente
- 32: Verstelleinrichtung
- 40: Zweites Ausbringelement
- 41: Spritzfächer der zweiten Ausbringelemente
- 50: Applikationsdüsen
- 60: Steuerungs- und/oder Regelsystem

- A: Auftreffbereich
- B1: Erster Betriebszustand
- B2: Zweiter Betriebszustand
- B3: Dritter Betriebszustand
- E: Erfassungsbereich
- N1: Landwirtschaftliche Nutzfläche
- N2: Nutzpflanze, Pflanzenbestand
- N3: Unkrautbewuchs, Wildbewuchs, Pflanzenbestand

## Patentansprüche

1. Landwirtschaftliches Spritzgerät (10), insbesondere Feldspritze, umfassend, zumindest eine Erfassungseinrichtung (20), welche dazu eingerichtet ist, einen Pflanzenbestand (N2, N3), insbesondere in Form von Unkraut- und/oder Wildbewuchs, auf einer landwirtschaftlichen Fläche zu erfassen, zumindest ein erstes und zweites Ausbringelement (30, 40), welche an einem Spritzgestänge (11) angeordnet und dazu eingerichtet sind, Spritzflüssigkeit in Abhängigkeit eines Betriebszustandes (B1-B3) auf der landwirtschaftlichen Nutzfläche (N1), insbesondere auf deren Pflanzenbestand (N2, N3), zu applizieren, wobei der Betriebszustand (B1-B3) in Abhängigkeit des erfassten Pflanzenbestandes (N2, N3) auswählbar ist, und zumindest eine Verstelleinrichtung, mittels welcher der Auftreffbereich (A) der von dem zumindest einen ersten und/oder zweiten Ausbringelement (30, 40) applizierbaren Spritzflüssigkeit einstellbar ist, wobei die Spritzflüssigkeit in einem ersten Betriebszustand (B1) über das zumindest eine erste Ausbringelement (30) und in einem zweiten Betriebszustand (B2) über das zumindest eine zweite Ausbringelement (40) applizierbar ist, **dadurch gekennzeichnet, dass** das zumindest eine erste und zweite Ausbringelement (30, 40) unterschiedliche Spritzprofile aufweisen, wobei das zumindest eine erste Ausbringelement (30) ein für eine Einzelpflanzenbehandlung geeignetes Spritzprofil und das zumindest eine zweite Ausbringelement (40) ein für eine Flächenbehandlung geeignetes Spritzprofil aufweisen.

2. Landwirtschaftliches Spritzgerät (10) nach zumindest einem der vorgenannten Ansprüche, **dadurch gekennzeichnet, dass** die Spritzflüssigkeit in einem dritten Betriebszustand (B3) über das zumindest eine erste und das zumindest eine zweite Ausbringelement (30, 40) applizierbar ist.

3. Landwirtschaftliches Spritzgerät (10) nach zumindest einem der vorgenannten Ansprüche, **dadurch gekennzeichnet, dass** mittels der Erfassungseinrichtung (20) die Abmessungen und/oder der Typ und/oder die Anzahl der Pflanzen, insbesondere in einem vorgegebenen Erfassungsbereich (E), erfassbar sind.

4. Landwirtschaftliches Spritzgerät (10) nach zumindest einem der vorgenannten Ansprüche, **dadurch gekennzeichnet, dass** die Geschwindigkeit des Spritzgerätes (10), insbesondere zumindest eines Ausbringelementes (30, 40), erfassbar ist und der Betriebszustand (B1-B3) in Abhängigkeit der Geschwindigkeit auswählbar ist.

5. Landwirtschaftliches Spritzgerät (10) nach zumindest einem der vorgenannten Ansprüche, **dadurch gekennzeichnet, dass** die Verstelleinrichtung zumindest einen Aktor umfasst, wobei das zumindest eine erste und/oder zweite Ausbringelement (30, 40) mittels des Aktors verstellbar ist.

6. Verfahren zum Applizieren von Spritzflüssigkeit auf einer landwirtschaftlichen Nutzfläche (N1) mit einem landwirtschaftlichen Spritzgerät (10) nach einem der vorstehenden Ansprüche mit den Schritten:
- Erfassen eines Pflanzenbestandes (N2, N3), insbesondere in Form von Unkraut- und/oder Wildbewuchs, auf einer landwirtschaftlichen Nutzfläche (N1) mittels einer Erfassungseinrichtung (20),
- Applizieren von Spritzflüssigkeit auf der landwirtschaftlichen Nutzfläche (N1), insbesondere auf deren Pflanzenbestand (N2, N3), in Abhängigkeit eines Betriebszustandes (B1-B3) mittels zumindest einem ersten und zweiten Ausbringelement (30, 40), welche an einem Spritzgestänge (11) angeordnet sind, und
- Verändern des Auftreffbereichs (A) der von dem zumindest einen ersten und/oder zweiten Ausbringelement (30, 40) abgegebenen Spritzflüssigkeit während des Ausbringvorgangs mittels einer Verstelleinrichtung,
**gekennzeichnet durch die Schritte:**
- Erfassen der Abmessungen und/oder des Typs und/oder der Anzahl der Pflanzen, insbesondere in einem vorgegebenen Erfassungsbereich (E), mittels der Erfassungseinrichtung (20); und
- Umschalten des Betriebszustandes (B1-B3) in Abhängigkeit der erfassten Abmessungen und/oder des Typs und/oder der Anzahl der Pflanzen, insbesondere durch Überschreiten eines vorgegebenen Schwellenwertes; und
- Auswählen des Betriebszustandes (B1-B3) in Abhängigkeit des erfassten Pflanzenbestandes (N2, N3); und
- Applizieren der Spritzflüssigkeit in einem ersten Betriebszustand (B1) und einem ersten Spritzprofil über das zumindest eine erste Ausbringelement (30); und/oder
- Applizieren der Spritzflüssigkeit in einem zweiten Betriebszustand (B2) und einem zweiten Spritzprofil über das zumindest eine zweite Ausbringelement (40);
wobei das zumindest eine erste Ausbringselement ein für eine Einzelpflanzenbehandlung geeignetes Spritzprofil und das zumindest eine zweite Ausbringelement ein für eine Flächenbehandlung geeignetes Spritzprofil aufweisen.

7. Verfahren nach Anspruch 6, **gekennzeichnet, durch den Schritt:**
- Applizieren der Spritzflüssigkeit in einem dritten Betriebszustand (B3) über das zumindest eine erste und zweite Ausbringelement (30, 40).

8. Verfahren nach Anspruch 7, **gekennzeichnet, durch den Schritt:**
- Umschalten des Betriebszustandes (B1-B3) in Abhängigkeit einer von dem Spritzgerät (10), insbesondere zumindest eines Ausbringelementes (30, 40), erfassbaren Geschwindigkeit.

## Claims

1. Agricultural sprayer (10), in particular a field sprayer, comprising at least one detection device (20) which is designed to detect vegetation (N2, N3), in particular in the form of weed and/or wild growth, on an agricultural surface, at least one first and second discharge element (30, 40) which are arranged on a spray boom (11) and are designed to apply spray liquid to the agricultural work surface (N1), in particular to the vegetation (N2, N3) thereof, depending on an operating state (B1-B3), the operating state (B1-B3) being selectable depending on the detected vegetation (N2, N3), and at least one adjusting device by means of which the impact area (A) of the spray liquid which can be applied by the at least one first and/or second discharge element (30, 40) can be adjusted, the spray liquid being applicable via the at least one first discharge element (30) in a first operating state (B1) and via the at least one second discharge element (40) in a second operating state (B2), **characterized in that** the at least one first and second discharge element (30, 40) have different spray profiles, the at least one first discharge element (30) having a spray profile suitable for treating individual plants and the at least one second discharge element (40) having a spray profile suitable for treating a surface.

2. Agricultural sprayer (10) according to at least one of the preceding claims, **characterized in that** the spray liquid can be applied via the at least one first and the at least one second discharge element (30, 40) in a third operating state (B3).

3. Agricultural sprayer (10) according to at least one of the preceding claims, **characterized in that** the dimensions and/or the type and/or the number of plants can be detected, in particular in a predetermined detection area (E), by means of the detection device (20).

4. Agricultural sprayer (10) according to at least one of the preceding claims, **characterized in that** the speed of the sprayer (10), in particular of at least one discharge element (30, 40), can be detected and the operating state (B1-B3) can be selected depending on the speed.

5. Agricultural sprayer (10) according to at least one of the preceding claims, **characterized in that** the adjusting device comprises at least one actuator, the at least one first and/or second discharge element (30, 40) being adjustable by means of the actuator.

6. Method for applying spray liquid to an agricultural work surface (N1) by means of an agricultural sprayer (10) according to any of the preceding claims, comprising the steps of:
- detecting vegetation (N2, N3), in particular in the form of weed and/or wild growth, on an agricultural work surface (N1) by means of a detection device (20),
- applying spray liquid to the agricultural work surface (N1), in particular to the vegetation (N2, N3) thereof, depending on an operating state (B1-B3) by means of at least one first and second discharge element (30, 40) which are arranged on a spray boom (11), and
- changing the impact area (A) of the spray liquid emitted by the at least one first and/or second discharge element (30, 40) during the discharge process by means of an adjusting device,
**characterized by** the steps of:
- detecting the dimensions and/or the type and/or the number of plants, in particular in a predetermined detection area (E), by means of the detection device (20); and
- switching the operating state (B1-B3) depending on the detected dimensions and/or the type and/or the number of plants, in particular by exceeding a predetermined threshold value; and
- selecting the operating state (B1-B3) depending on the detected vegetation (N2, N3); and
- applying the spray liquid in a first operating state (B1) and a first spray profile via the at least one first discharge element (30); and/or
- applying the spray liquid in a second operating state (B2) and a second spray profile via the at least one second discharge element (40);
the at least one first discharge element having a spray profile suitable for treating individual plants and the at least one second discharge element has a spray profile suitable for treating a surface.

7. Method according to claim 6, **characterized by the step of:**
- applying the spray liquid via the at least one first and second discharge element (30, 40) in a third operating state (B3).

8. Method according to claim 7, **characterized by the step of:**
- switching the operating state (B1-B3) depending on a speed that can be detected by the sprayer (10), in particular of at least one discharge element (30, 40).

## Revendications

1. Appareil de pulvérisation (10) agricole, en particulier pulvérisateur agricole, comprenant au moins un dispositif de détection (20) qui est configuré pour détecter une population végétale (N2, N3), en particulier sous la forme de mauvaises herbes et/ou de végétation sauvage, sur une surface agricole, au moins un premier et un second élément d'épandage (30, 40), qui sont disposés sur une rampe de pulvérisation (11) et sont configurés pour appliquer du liquide de pulvérisation, en fonction d'un état de fonctionnement (B1-B3), sur la surface utile (N1) agricole, en particulier sur sa population végétale (N2, N3), dans lequel l'état de fonctionnement (B1-B3) peut être sélectionné en fonction de la population végétale (N2, N3) détectée, et au moins un dispositif de réglage au moyen duquel la zone d'impact (A) du liquide de pulvérisation pouvant être appliqué par l'au moins un premier et/ou un second élément d'épandage (30, 40) peut être réglée, dans lequel le liquide de pulvérisation peut être appliqué dans un premier état de fonctionnement (B1) par l'intermédiaire de l'au moins un premier élément d'épandage (30) et dans un deuxième état de fonctionnement (B2) par l'intermédiaire de l'au moins un second élément d'épandage (40), **caractérisé en ce que** l'au moins un premier et un second élément d'épandage (30, 40) présentent des profils de pulvérisation différents, dans lequel l'au moins un premier élément d'épandage (30) présente un profil de pulvérisation approprié pour un traitement plante par plante et l'au moins un second élément d'épandage (40) présente un profil de pulvérisation approprié pour un traitement de surface.

2. Appareil de pulvérisation (10) agricole selon au moins l'une des revendications précédentes, **caractérisé en ce que** le liquide de pulvérisation peut être appliqué dans un troisième état de fonctionnement (B3) par l'intermédiaire de l'au moins un premier et de l'au moins un second élément d'épandage (30, 40).

3. Appareil de pulvérisation (10) agricole selon au moins l'une des revendications précédentes, **caractérisé en ce que** les dimensions et/ou le type et/ou le nombre de plantes peuvent être détectés à l'aide du dispositif de détection (20), en particulier dans une zone de détection (E) prédéfinie.

4. Appareil de pulvérisation (10) agricole selon au moins l'une des revendications précédentes, **caractérisé en ce que** la vitesse de l'appareil de pulvérisation (10), en particulier d'au moins un élément d'épandage (30, 40), peut être détectée, et l'état de fonctionnement (B1-B3) peut être sélectionné en fonction de la vitesse.

5. Appareil de pulvérisation (10) agricole selon au moins l'une des revendications précédentes, **caractérisé en ce que** le dispositif de réglage comprend au moins un actionneur, dans lequel l'au moins un premier et/ou un second élément d'épandage (30, 40) peut être réglé au moyen de l'actionneur.

6. Procédé destiné à l'application de liquide de pulvérisation sur une surface utile (N1) agricole au moyen d'un appareil de pulvérisation (10) agricole selon l'une des revendications précédentes, comportant les étapes consistant à :
- détecter une population végétale (N2, N3), en particulier sous forme de mauvaises herbes et/ou de végétation sauvage, sur une surface utile (N1) agricole à l'aide d'un dispositif de détection (20),
- appliquer du liquide de pulvérisation sur la surface utile (N1) agricole, en particulier sur sa population végétale (N2, N3), en fonction d'un état de fonctionnement (B1-B3), à l'aide d'au moins un premier et un second élément d'épandage (30, 40), lesquels sont disposés sur une rampe de pulvérisation (11), et
- modifier la zone d'impact (A) du liquide de pulvérisation délivré par l'au moins un premier et/ou un second élément d'épandage (30, 40) pendant le processus d'épandage à l'aide d'un dispositif de réglage,
**caractérisé par** les étapes consistant à :
- détecter les dimensions et/ou le type et/ou le nombre de plantes, en particulier dans une zone de détection (E) prédéfinie, à l'aide du dispositif de détection (20) ; et
- commuter l'état de fonctionnement (B1-B3) en fonction des dimensions et/ou du type et/ou du nombre détectés de plantes, en particulier par dépassement d'une valeur seuil prédéfinie ; et
- sélectionner l'état de fonctionnement (B1-B3) en fonction de la population végétale (N2, N3) détectée ; et
- appliquer le liquide de pulvérisation dans un premier état de fonctionnement (B1) et un premier profil de pulvérisation par l'intermédiaire de l'au moins un premier élément d'épandage (30) ; et/ou
- appliquer le liquide de pulvérisation dans un deuxième état de fonctionnement (B2) et un second profil de pulvérisation par l'intermédiaire de l'au moins un second élément d'épandage (40) ;
dans lequel l'au moins un premier élément d'épandage présente un profil de pulvérisation approprié pour un traitement plante par plante et l'au moins un second élément d'épandage présente un profil de pulvérisation approprié pour un traitement de surface.

7. Procédé selon la revendication 6, **caractérisé par** l'étape consistant à :
- appliquer le liquide de pulvérisation dans un troisième état de fonctionnement (B3) par l'intermédiaire de l'au moins un premier et un second élément d'épandage (30, 40).

8. Procédé selon la revendication 7, **caractérisé par** l'étape consistant à :
- commuter l'état de fonctionnement (B1-B3) en fonction d'une vitesse pouvant être détectée de l'appareil de pulvérisation (10), en particulier d'au moins un élément d'épandage (30, 40).
